# EUROPÄISCHE PATENTSCHRIFT

(11) **EP 3 695 688 B1**
(45) Veröffentlichungstag und Bekanntmachung des Hinweises auf die Patenterteilung: **22.06.2022**
(21) Anmeldenummer: 18796932.4
(22) Anmeldetag: 05.11.2018
(51) Int. Cl.: H05B 45/382, H05B 45/50, H02M 3/335, H02J 9/06

(54) **NOTLICHT-BETRIEBSGERÄT, NOTLICHT-MODUL UND VERFAHREN ZUR STEUERUNG EINES NOTLICHT-BETRIEBSGERÄTS**
EMERGENCY LIGHT OPERATING DEVICE, EMERGENCY LIGHT MODULE AND METHOD FOR CONTROLLING AN EMERGENCY LIGHT OPERATING DEVICE
APPAREIL D'ACTIONNEMENT D'ÉCLAIRAGE D'URGENCE, MODULE D'ÉCLAIRAGE D'URGENCE ET PROCÉDÉ DE COMMANDE D'UN APPAREIL D'ACTIONNEMENT D'ÉCLAIRAGE D'URGENCE

(30) Priorität: 17.11.2017 DE 102017220553
(43) Veröffentlichungstag der Anmeldung: 19.08.2020
(73) Patentinhaber: Tridonic GmbH & Co. KG, 6851 Dornbirn (AT)
(72) Erfinder: SACCAVINI, Lukas, 6850 Dornbirn (AT); MAKWANA, Deepak, Newcastle Upon Tyne Tyne and Wear NE5 2DJ (GB)
(74) Vertreter: Rupp, Christian
(86) Internationale Anmeldenummer: PCT/EP2018/080098
(87) Internationale Veröffentlichungsnummer: WO 2019/096597

(56) Entgegenhaltungen:
- DE-A1-102008 055 862
- DE-A1-102010 003 797
- US-A1- 2016 020 703
- US-A1- 2016 270 174

## Beschreibung

Die Erfindung betrifft ein Notlicht-Betriebsgerät, ein Notlicht-Modul und ein Verfahren zur Steuerung eines Notlicht-Betriebsgeräts. Insbesondere weist das Notlicht-Betriebsgerät einen getakteten Wandler, z.B. einen Flyback-Konverter (auch als isolierter Sperrwandler bezeichnet) und eine (hinsichtlich der Wicklungen des Flyback-Konverters) sekundärseitige Steuereinheit auf, die den sekundärseitigen Strom erfasst. Der sekundärseitig erfasste Strom wird ausgewertet, um Leuchtmittel, insbesondere eine LED-Strecke, selektiv ausgehend von einer sekundärseitig angeordneten, über den Flyback-Konverter aufladbaren Batterie zu versorgen.

Das Notlicht-Betriebsgerät ist durch eine elektrisch isolierende Barriere, insbesondere einem Übertrager eines Flyback-Konverters, in wenigstens eine Primärseite und eine davon potentialgetrennte Sekundärseite geteilt. Der getaktete Wandler ist dazu eingerichtet, elektrische Energie von der Primärseite durch induktive Kopplung auf die Sekundärseite der Betriebsschaltung zu übertragen. Eine Steuereinheit ist (potentialmässig) auf der Sekundärseite der Betriebsschaltung angeordnet.

Bei synchronen Flyback Konvertern ist es bekannt, dass eine Steuerschaltung den Stromverlauf bei leitend geschaltetem sekundärseitigen FET erfasst, indem sie den Einschaltwiderstand des FET wie einen Shunt benutzt und über einen Sensoreingang denen dann typischerweise ansteigenden Strom in der Einschaltphase erfasst. Diese Erfassung kann beispielsweise verwendet, um zur korrekten Takten der Sekundärseite des synchronen Flyback Konverters die Ausschaltzeitdauer für den sekundärseitigen FET zu bestimmen.

Die DE 10 2008 055862 A1 offenbart ein Notlicht-Betriebsgerät zur Versorgung mindestens eines Leuchtmittels gemäß dem Oberbegriff des Patentanspruchs 1.

Der Erfindung liegt nun die Aufgabe zugrunde, die Notlichtumschaltung auf die Batterieversorgung bei einem Ausfall der Netzspannungsversorgung zu beschleunigen.

Diese Aufgabe wird gelöst durch ein Notlicht-Betriebsgerät gemäß Anspruch 1, ein Notlicht-Modul gemäß Anspruch 9 beziehungsweise ein Verfahren gemäß Anspruch 10.

Das erfindungsgemäße Notlicht-Betriebsgerät zur Versorgung mindestens eines Leuchtmittels, insbesondere eines Notlicht-Leuchtmittels, weist auf:
- einen primärseitig mit einer Versorgungsspannung versorgten, potentialgetrennten getakteten synchronen Wandler, insbesondere einen Flyback-Konverter, wobei Versorgungsanschlüsse für das Leuchtmittel an der Sekundärseite des Wandlers vorgesehen sind,
- eine sekundärseitig angeordnete, schaltbare Batterie zur Versorgung des mindestens einen

Leuchtmittels in einem Notbetriebsfall, in dem keine Versorgungsspannung vorhanden ist,
- eine sekundärseitig angeordnete Steuereinheit, die dazu eingerichtet ist, einen sekundärseitigen Strom oder eine sekundärseitige Spannung zu erfassen und das mindestens eine

Leuchtmittel selektiv ausgehend von der sekundärseitig angeordneten, über den Wandler aufladbaren Batterie zu versorgen.

Gemäß der Erfindung wird ein synchroner Wandler, insbesondere ein Flyback-Konverter, verwendet, also ein Wandler, bei dem sekundärseitig ein aktiv von der Steuereinheit angesteuerter Schalter, zum Beispiel in Form eines Transistors, vorgesehen ist. Der Wandler und die Steuereinheit werden gemäß der Erfindung verwendet, um schnell den Ausfall der Primärversorgung zu erkennen und dann auf die Batterieversorgung umzuschalten. Mittels des sekundärseitigen Stroms wird der Wegfall der primärseitigen Netzspannungsversorgung indirekt erfasst. Für die Erfassung ist keine Kommunikation mit der Primärseite erforderlich. Es kann ein bereits vorhandener Sensoreingang (sensing pin) der Steuereinheit, wie zum Beispiel einem ASIC (anwendungsspezifische integrierte Schaltung, englisch applicationspecific integrated circuit), verwendet werden.

Ein sekundärseitig angeordneter Stromsensor ist vorgesehen, der zur Erfassung des sekundärseitigen Stroms mit einem Sensoreingang der Steuereinheit in Verbindung steht. Der Stromsensor kann gängige Sensoren umfassen, ebenfalls umfasst ist eine indirekte Strommessung zum Beispiel über eine Spannungsmessung an einem Shunt Widerstand.

Alternativ zu dem sekundärseitig angeordneten Stromsensor ist ein sekundärseitig angeordneter Schalter vorgesehen, der von der Steuereinheit aktiv ansteuerbar ist und zur Erfassung des sekundärseitigen Stroms mit einem Sensoreingang der Steuereinheit in Verbindung steht. Ein derartiger Schalter ist zur korrekten Taktung der Sekundärseite des synchronen Wandlers meist vorhanden und wird hier zusätzlich zur Detektion des Wegfalls der Versorgungsspannung auf der Primärseite verwendet.

Der Stromsensor oder der Schalter kann ein Feldeffekttransistor sein. Feldeffekttransistoren (FET) oder auch Metall-Oxid-Halbleiter-Feldeffekttransistoren (MOSFET) sind weit verbreitet und sind bei getakteten synchronen Wandlern meist vorhanden.

Die Steuereinheit ist eingerichtet, eine Body-Diode des Stromsensors oder des Schalters als Widerstand für die Strommessung zu verwenden. Die Body-Diode wird vorteilhaft als Shunt Widerstand verwendet.

Die Steuereinheit kann eingerichtet sein, Amplitudenänderungen an dem Sensoreingang zu detektieren und bei einem Ausbleiben einer Amplitudenänderung die Batterie zu schalten. Ein Ausbleiben einer Amplitudenänderung kann deutlich schneller detektiert werden als zum Beispiel die Unterschreitung einer sekundärseitigen Spannung direkt an der sekundärseitigen Wicklung des Transformators.

Die Steuereinheit kann eingerichtet sein, das Ausbleiben der Amplitudenänderung festzustellen, wenn eine erste periodische Signalflanke nicht detektiert wird. Die Signalflanke kann steigend oder fallend sein. Durch die Detektion der ersten ausbleibenden periodischen Flanke und das anschließende Umschalten auf die Batterieversorgung kann sehr schnell reagiert werden. Anhand der Periode des Signals ist der Zeitpunkt der nächsten erwarteten, das heißt der ersten, periodischen Signalflanke bekannt.

Die Steuereinheit kann eingerichtet sein, eine sekundärseitige Spannung zu überwachen und anhand der Überwachung dieser sekundärseitige Spannung den Ausfall der Primärversorgung zu erkennen und dann auf die Batterieversorgung umzuschalten. Als sekundärseitige Spannung kann beispielsweise die Spannung über dem sekundärseitigen Schalter überwacht werden.

Die sekundärseitig angeordnete Steuereinheit kann dazu eingerichtet sein, anhand des erfassten sekundärseitigen Stroms oder der erfassten sekundärseitige Spannung einen Ausfall der Versorgungsspannung zu erkennen und dann das mindestens eine Leuchtmittel ausgehend von der Batterie zu versorgen.

Die Batterie kann über den Wandler gespeist sein. Die komplette sekundärseitige Einheit wird über den Wandler versorgt.

Das mindestens eine Leuchtmittel kann eine LED-Strecke umfassen, die aus einer oder mehreren LED Einheiten bestehen kann.

Das erfindungsgemäße Notlicht-Modul umfasst ein Notlicht-Betriebsgerät wie zuvor beschrieben und mindestens ein von diesem versorgtes Leuchtmittel, insbesondere ein Notlicht-Leuchtmittel. Es gelten die gleichen Vorteile und Modifikationen wie zuvor beschrieben.

Das erfindungsgemäße Verfahren zur Steuerung eines Notlicht-Betriebsgeräts zur Versorgung von Leuchtmitteln, insbesondere Notlicht-Leuchtmitteln, mit einem primärseitig mit einer Versorgungsspannung versorgten potentialgetrennten, getakteten Wandler, insbesondere einem Flyback-Konverter, wobei Versorgungsanschlüsse für mindestens ein Leuchtmittel an der Sekundärseite des Wandlers vorgesehen sind, sieht vor, dass eine sekundärseitig angeordnete Steuereinheit einen sekundärseitigen Strom erfasst, eine sekundärseitig angeordnete Batterie zur Versorgung des mindestens einen Leuchtmittels in einem Notbetriebsfall lediglich in Abhängigkeit des sekundärseitigen Stroms schaltet. Es gelten die gleichen Vorteile und Modifikationen wie zuvor beschrieben.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Notlicht-Moduls und eines Notlicht-Betriebsgeräts;
- Figur 2: eine exemplarische Darstellung von Schaltungsparametern;
- Figur 3: eine schematische Darstellung eines Notlicht-Betriebsgeräts; und
- Figur 4: eine exemplarische Darstellung von Schaltungsparametern.

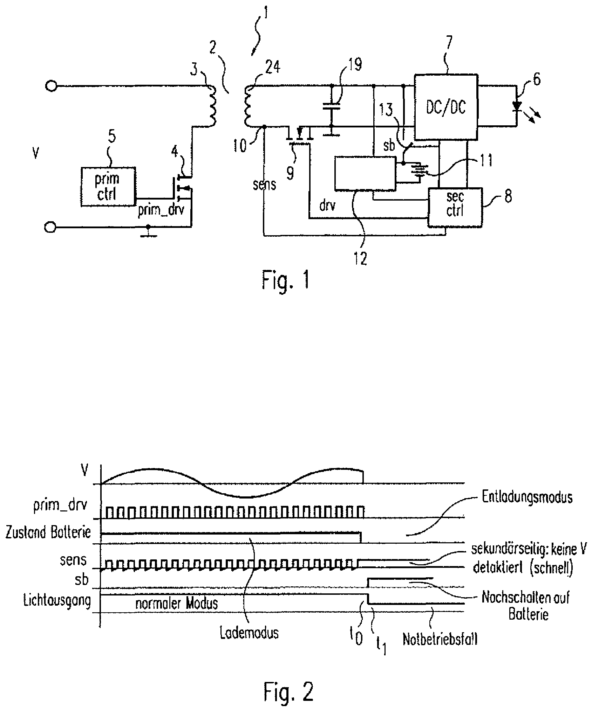

Figur 1 zeigt ein Notlicht-Betriebsgerät 1 mit einem Flyback Konverter 2, der primärseitig von einer Versorgungsspannung V versorgt wird. Die sekundärseitigen Elemente des Notlicht-Betriebsgeräts 1 werden ebenfalls von der Versorgungsspannung V versorgt. Dazu umfasst der Flyback Konverter 2 einen Transformator bestehend aus einer primärseitigen Wicklung 3 und einer sekundärseitigen Wicklung 24 zur potenzial-getrennten Energieübertragung. Die primärseitige Wicklung 3 wird von einem aktiv gesteuerten Schaltelement 4 angesteuert. Das Schaltelement 4, beispielsweise ein FET, kann von einer Steuerschaltung 5 angesteuert werden.

Sekundärseitig ist ein Leuchtmittel 6, insbesondere ein Notlicht-Leuchtmittel, vorgesehen. Das Leuchtmittel 6 kann zum Beispiel eine LED-Strecke umfassen. Dem Leuchtmittel 6 ist ein DC/DC Wandler 7 vorgeschaltet, welcher die sekundärseitige Spannung für das Leuchtmittel 6 anpasst. Dem DC/DC Wandler 7 ist ein Kondensator 19 vorgeschaltet, welcher die Ausgangsspannung des Flyback Konverters 2 stabilisiert und glättet.

Weiterhin ist sekundärseitig eine Steuereinheit 8 angeordnet, welche einen Schalter oder ein aktives Schaltelement 9, zum Beispiel in Form eines FET ansteuert. Die Steuereinheit 8 kann als ASIC oder integrierte Schaltung ausgeführt sein. Die Steuerung des Flyback Konverters 2 erfolgt potenzialgetrennt, insbesondere induktiv, durch Ansteuerung der sekundärseitigen Wicklung 24. Somit kann die Steuereinheit 8, obwohl sie sekundärseitig angeordnet ist, den primärseitig angeordneten getakteten Schalter 4 ansteuern und entsprechend den Takt bzw. die Einschaltzeit des Flyback Konverters 2 einstellen. Darüber hinaus steuert die Steuereinheit 8 den DC/DC Wandler 7 an.

Sekundärseitig ist ein Stromsensor 10 vorgesehen, der zur Erfassung des sekundärseitigen Stroms mit einem Sensoreingang der Steuereinheit 8 in Verbindung steht. Der Stromsensor 10 kann ein üblicher Stromsensor sein oder als Schalter ausgebildet sein. Ebenso ist es möglich, dass aktive Schaltelement 9 als Stromsensor zu verwenden.

Weiterhin ist sekundärseitig eine Batterie 11 vorgesehen, welche über eine Ladeschaltung 12 durch die sekundärseitige Spannung aufgeladen wird. Die Ladeschaltung 12 wird von der Steuereinheit 8 gesteuert. Zudem ist die Batterie 11 mittels eines Schalters 13, welcher von der Steuereinheit 8 angesteuert wird, schaltbar. Die Batterie 11 dient zur Versorgung des Leuchtmittels 6 in einem Notbetriebsfall, in dem die Versorgungsspannung V ausgefallen ist.

Im Folgenden wird anhand der Signalverläufe von Figur 2 erläutert, wie die Steuereinheit 8 den primärseitigen Strom detektiert, aus dem primärseitigen Strom einen Ausfall der Versorgungsspannung V erkennt und dann die Batterie 11 zur Versorgung des Leuchtmittels 6 einschaltet.

In der ersten Zeile von Figur 2 ist der Signalverlauf der Versorgungsspannung V aufgetragen. In der zweiten Zeile ist der Signalverlauf an dem primärseitigen getakteten Schalter 4 dargestellt. In der dritten Zeile ist der Zustand der Batterie 11 dargestellt, die geladen wird solange die Versorgungsspannung V vorhanden ist. Bei einem Ausfall der Versorgungsspannung V zu einem Zeitpunkt to wird ebenfalls das Laden der Batterie 11 beendet.

In der vierten Zeile von Figur 2 ist der Signalverlauf an dem Stromsensor 10 bzw. an dem Sensoreingang der Steuereinheit 8 dargestellt. Es ist zu erkennen, dass der Sensor-Signalverlauf, das heißt der Verlauf des sekundärseitigen Stroms, dem Signalverlauf des primärseitigen getakteten Schalters 4 folgt. Der Sensor-Signalverlauf hat eine ständig wechselnde Amplitude, er toggelt. Dieses Toggeln wird nun genutzt, um einen Abbruch der Versorgungsspannung V zu erkennen. Wie in Figur 2 zu sehen ist, hört zum Zeitpunkt to bzw. unmittelbar danach das Toggeln auf. Beispielsweise mittels eines Komparators kann dies sehr schnell und zuverlässig erkannt werden.

In der fünften Zeile von Figur 2 ist der Signalverlauf für den Schalter 13 dargestellt. Zu einem Zeitpunkt t₁ steuert die Steuereinheit 8 den Schalter 13 an, sodass dieser die Batterie 11 zur Versorgung des Leuchtmittels 6 schaltet. Die Batterie geht in einen Entladungsmodus über. Somit wird, wie in der letzten Zeile von Figur 2 dargestellt, die Beleuchtung des Notlicht-Betriebsgeräts 1 von einem normalen Modus in den Notbetriebsfall umgestellt.

Es ist zu sehen, dass die beiden Zeitpunkte t₀ und t₁ im Vergleich zur Taktfrequenz des primärseitigen getakteten Schalters 4 bzw. des Signals am Sensoreingang der Steuereinheit 8 zeitlich nur kurz versetzt sind. Dies bedeutet, dass die Erfassung des Ausfalls der Versorgungsspannung V und die Umschaltung auf die Batterieversorgung bzw. in den Notbetriebsfall sehr schnell erfolgt. Da die Erfassung auf den Flanken des sekundärseitigen getakteten Stroms basiert, erfolgt eine Erkennung des Ausfalls der Versorgungsspannung V spätestens nach einer Periode des Signalverlaufs des sekundärseitigen getakteten Stroms. Dies ist dann der Fall, wenn statt einer erwarteten Flanke keine Amplitudenänderung detektiert wird bzw. die Änderung der Amplitude zu gering ist, also einen definierten Grenz- oder Schwellwert nicht unter- oder überschreitet.

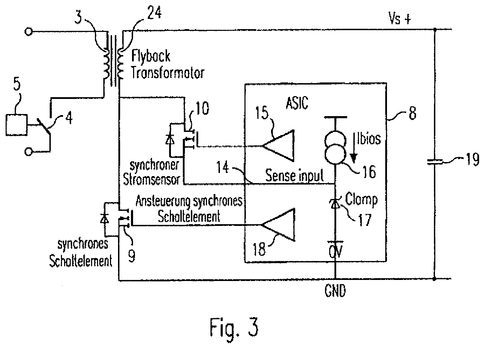

In Figur 3 sind die Steuereinheit 8, der Stromsensor 10 und das Schaltelement 9 detaillierter dargestellt. Der Stromsensor 10 ist als selbstsperrender n-Kanal MOS-FET ausgeführt, die Body Diode ist ebenfalls dargestellt. Der Source Anschluss ist mit dem Sensoreingang 14 der Steuereinheit 8 verbunden. Eine Treiberstufe 15 der Steuereinheit 8 steuert das Gate des Stromsensors 10 an.

Mit einem Komparator an dem Sensoreingang 14 der Steuereinheit 8 kann das Toggeln des Signalverlaufs detektiert werden. Bis die Bodydiode des synchronen Flyback Konverters 2 leitend wird, wird immer ein Schaltsignal an dem Sensoreingang 14 vorhanden sein, sogar für die Fälle einer niedrigen Last oder eines Einschaltvorgangs. Für die Einstellung eines Arbeitspunktes bzw. zur Erhöhung der Robustheit sind eine Stromquelle 16 zur Einstellung eines Ruhestroms und eine Clamp Diode 17 zur Begrenzung der Spannung vorgesehen.

Das Schaltelement 9 oder der synchrone Gleichrichter ist als selbstsperrender n-Kanal MOS-FET ausgeführt, die Body Diode ist ebenfalls dargestellt. Der Source Anschluss ist mit Ground oder Masse verbunden. Eine Treiberstufe 18 der Steuereinheit 8 steuert das Gate des Schaltelements 9 an.

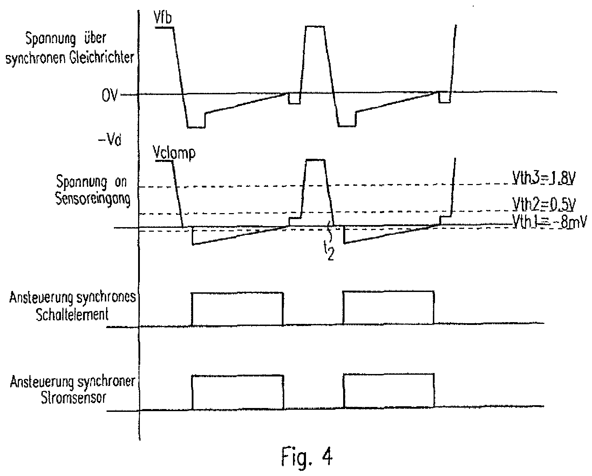

In Figur 4 sind die Signalverläufe am Schaltelement 9 und am Stromsensor 10 bzw. am Sensoreingang 14 dargestellt. In der ersten Zeile ist der Spannungsverlauf über dem Schaltelement 9 oder dem synchronen Gleichrichter dargestellt, der im Wesentlichen dem sekundärseitigen Spannungsverlauf entspricht. In der zweiten Zeile ist die Spannung an dem Sensoreingang 14 der Steuereinheit 8 dargestellt. Diese Spannung fällt proportional zu dem sekundärseitigen Strom über dem Stromsensor 10, dem selbstsperrenden n-Kanal MOS-FET, ab, so dass über diese Spannung der sekundärseitige Strom erfasst werden kann. Die Spannung an dem Sensoreingang 14 wird durch die Clamp Diode 17 begrenzt. Es sind drei Schwellspannungen Vth1, Vth2 und Vth3 dargestellt, die zur Flankendetektion bzw. zum Ausbleiben des Toggelns verwendet werden können.

Verbleibt zum Beispiel die Spannung zu einem Zeitpunkt t₂, an dem bei funktionierender Versorgungsspannung eine fallende Flanke ansteht (V= 1,8 V), oberhalb von Vth3, so wird ein Ausfall der Versorgungsspannung erkannt.

In den beiden unteren Zeilen sind die die Ansteuerungen von dem Stromsensor 10 und dem Schaltelement 9 dargestellt, die von den Treiberstufen 15 und 18 der Steuereinheit 8 ausgegeben werden.

Es kann beispielsweise auch eine Spannung überwacht werden, um den Ausfall der Primärversorgung zu erkennen und dann auf die Batterieversorgung umzuschalten. Es kann dabei beispielsweise die Spannung über dem sekundärseitigen Schalter 9 überwacht werden.

## Patentansprüche

1. Notlicht-Betriebsgerät zur Versorgung mindestens eines Leuchtmittels (6), insbesondere eines Notlicht-Leuchtmittels, aufweisend
einen primärseitig mit einer Versorgungsspannung (V) versorgten, potentialgetrennten getakteten synchronen Wandler (2), insbesondere einen Flyback Konverter, wobei Versorgungsanschlüsse für das mindestens eine Leuchtmittel (6) an der Sekundärseite des Wandlers (2) vorgesehen sind,
eine sekundärseitig angeordnete, schaltbare Batterie (11) zur Versorgung des mindestens einen Leuchtmittels (6) in einem Notbetriebsfall, in dem keine Versorgungsspannung (V) vorhanden ist,
eine sekundärseitig angeordnete Steuereinheit (8), die dazu eingerichtet ist, einen sekundärseitigen Strom oder eine sekundärseitige Spannung zu erfassen und das mindestens eine Leuchtmittel (6) selektiv ausgehend von der sekundärseitig angeordneten, über den Wandler (2) aufladbaren Batterie (11) zu versorgen,
wobei ein sekundärseitig angeordneter Stromsensor (10) vorgesehen ist, der zur Erfassung des sekundärseitigen Stroms mit einem Sensoreingang (14) der Steuereinheit (8) in Verbindung steht, oder wobei ein sekundärseitig angeordneter Schalter (9) vorgesehen ist, der von der Steuereinheit (8) aktiv ansteuerbar ist und zur Erfassung des sekundärseitigen Stroms mit einem Sensoreingang der Steuereinheit (8) in Verbindung steht,
**dadurch gekennzeichnet, dass** die Steuereinheit (8) eingerichtet ist, eine Body-Diode des Stromsensors (10) oder des Schalters (9) als Widerstand für die Strommessung zu verwenden.

2. Notlicht-Betriebsgerät nach Anspruch 1, wobei der Stromsensor (10) oder der Schalter (9) ein Feldeffekttransistor ist.

3. Notlicht-Betriebsgerät nach Anspruch 1 oder Anspruch 2, wobei die Steuereinheit (8) eingerichtet ist, Amplitudenänderungen an dem Sensoreingang zu detektieren und bei einem Ausbleiben einer Amplitudenänderung die Batterie (11) zu schalten.

4. Notlicht-Betriebsgerät nach Anspruch 3, wobei die Steuereinheit (8) eingerichtet ist, das Ausbleiben der Amplitudenänderung festzustellen, wenn eine erste periodische Signalflanke nicht detektiert wird.

5. Notlicht-Betriebsgerät nach Anspruch 1, wobei als sekundärseitige Spannung die Spannung über dem sekundärseitigen Schalter (9) überwacht wird.

6. Notlicht-Betriebsgerät nach einem der vorhergehenden Ansprüche, wobei die sekundärseitig angeordnete Steuereinheit (8) dazu eingerichtet ist, anhand des erfassten sekundärseitigen Stroms oder der erfassten sekundärseitige Spannung einen Ausfall der Versorgungsspannung (V) zu erkennen und dann das mindestens eine Leuchtmittel (6) ausgehend von der Batterie (11) zu versorgen.

7. Notlicht-Betriebsgerät nach einem der vorhergehenden Ansprüche, wobei die Batterie (11) über den Wandler (2) gespeist ist.

8. Notlicht-Betriebsgerät nach einem der vorhergehenden Ansprüche, wobei das mindestens eine Leuchtmittel (6) eine LED-Strecke umfasst

9. Notlicht-Modul, aufweisend ein Notlicht-Betriebsgerät (1) nach einem der vorhergehenden Ansprüche und mindestens ein von diesem versorgtes Leuchtmittel (6), insbesondere ein Notlicht-Leuchtmittel.

10. Verfahren zur Steuerung eines Notlicht-Betriebsgeräts (1) zur Versorgung von Leuchtmitteln (6), insbesondere Notlicht-Leuchtmitteln, mit einem primärseitig mit einer Versorgungsspannung versorgten potentialgetrennten, getakteten Wandler (2), insbesondere einem Flyback Konverter, wobei Versorgungsanschlüsse für mindestens ein Leuchtmittel (6) an der Sekundärseite des Wandlers (2) vorgesehen sind, wobei ein sekundärseitig angeordneter Stromsensor (10) vorgesehen ist, der zur Erfassung eines sekundärseitigen Stroms mit einem Sensoreingang (14) der Steuereinheit (8) in Verbindung steht, oder wobei ein sekundärseitig angeordneter Schalter (9) vorgesehen ist, der von der Steuereinheit (8) aktiv ansteuerbar ist und zur Erfassung des sekundärseitigen Stroms mit einem Sensoreingang der Steuereinheit (8) in Verbindung steht, bei dem eine sekundärseitig angeordnete Steuereinheit (8) einen sekundärseitigen Strom oder eine sekundärseitige Spannung erfasst und eine sekundärseitig angeordnete Batterie (11) zur Versorgung des mindestens einen Leuchtmittels (6) in einem Notbetriebsfall in Abhängigkeit des sekundärseitigen Stroms oder der sekundärseitigen Spannung schaltet, **dadurch gekennzeichnet, dass** die Steuereinheit (8) eine Body-Diode des Stromsensors (10) oder des Schalters (9) als Widerstand für die Strommessung verwendet.

## Claims

1. Emergency lighting operating devices for supplying at least one illuminant (6), in particular an emergency lighting illuminant, comprising
an electrically isolated, clocked synchronous converter (2), in particular a flyback converter, supplied on the primary side with a supply voltage (V), wherein supply connections for the at least one illuminant (6) are provided on the secondary side of the converter (2),
a switchable battery (11) arranged on the secondary side, for supplying the at least one illuminant (6) in an emergency operating situation in which no supply voltage (V) is present,
a control unit (8) arranged on the secondary side, which is configured to detect a secondary-side current or a secondary-side voltage and to supply the at least one illuminant (6) selectively, starting from the battery (11) arranged on the secondary side and chargeable via the converter (2),
wherein a current sensor (10) arranged on the secondary side is provided which is connected to a sensor input (14) of the control unit (8) in order to detect the current on the secondary side, or wherein a switch (9) arranged on the secondary side is provided, which can be actively controlled by the control unit (8) and is connected to a sensor input of the control unit (8) in order to detect the current on the secondary side,
**characterized in that** the control unit (8) is configured to use a body diode of the current sensor (10) or of the switch (9) as a resistance for current measurement.

2. Emergency lighting operating device according to Claim 1, wherein the current sensor (10) or the switch (9) is a field effect transistor.

3. Emergency lighting operating device according to Claim 1 or Claim 2, wherein the control unit (8) is configured to detect amplitude changes at the sensor input and, in the absence of an amplitude change, to connect the battery (11).

4. Emergency lighting operating device according to Claim 3, wherein the control unit (8) is configured to determine the absence of the amplitude change if a first periodic signal edge is not detected.

5. Emergency lighting operating device according to Claim 1, wherein the voltage across the secondary-side switch (9) is monitored as the secondary-side voltage.

6. Emergency lighting operating device according to any one of the preceding claims, wherein the control unit (8) arranged on the secondary side is configured to detect a failure of the supply voltage (V) using the detected secondary-side current or the detected secondary-side voltage, and then to supply the at least one illuminant (6) from the battery (11).

7. Emergency lighting operating device according to any one of the preceding claims, wherein the battery (11) is fed via the converter (2).

8. Emergency lighting operating device according to any one of the preceding claims, wherein the at least one illuminant (6) comprises an LED strip.

9. Emergency lighting module, comprising an emergency lighting operating device (1) according to any one of the preceding claims and at least one illuminant (6) supplied by said operating device (1), in particular an emergency lighting illuminant.

10. Method for controlling an emergency lighting operating device (1) for supplying illuminants (6), in particular emergency lighting illuminants, having an electrically isolated, clocked converter (2), in particular a flyback converter, supplied on the primary side with a supply voltage, wherein supply connections for at least one illuminant (6) are provided on the secondary side of the converter (2); wherein a current sensor (10) arranged on the secondary side is provided which is connected to a sensor input (14) of the control unit (8) in order to detect a secondary-side current; or wherein a switch (9) arranged on the secondary side is provided, which is actively controllable by the control unit (8) and is connected to a sensor input of the control unit (8) in order to detect a secondary-side current, in which
a control unit (8) arranged on the secondary side detects a secondary-side current or a secondary-side voltage, and
a battery (11) arranged on the secondary side for supplying the at least one illuminant (6) in an emergency operating situation connects depending on the secondary-side current or the secondary-side voltage,
**characterized in that** the control unit (8) uses a body diode of the current sensor (10) or of the switch (9) as resistance for current measurement.

## Revendications

1. Appareil d'actionnement d'éclairage d'urgence pour l'alimentation d'au moins un moyen d'éclairage (6), en particulier d'un moyen d'éclairage d'urgence, comportant
un transducteur (2) synchrone cadencé à séparation de potentiel, alimenté du côté primaire par une tension d'alimentation (V), en particulier un convertisseur à transfert indirect, des bornes d'alimentation pour l'au moins un moyen d'éclairage (6) étant présentes du côté secondaire du transducteur (2),
une batterie (11) commutable, agencée du côté secondaire, pour l'alimentation de l'au moins un moyen d'éclairage (6) dans un cas de fonctionnement de secours dans lequel aucune tension d'alimentation (V) n'est disponible,
une unité de commande (8) agencée du côté secondaire qui sert à détecter un courant côté secondaire ou la tension côté secondaire et à alimenter sélectivement l'au moins un moyen d'éclairage (6) à partir de la batterie (11) rechargeable à travers le transducteur (2) agencée du côté secondaire,
un capteur de courant (10) agencé du côté secondaire étant prévu, lequel est, pour la détection du courant côté secondaire, en liaison avec une entrée de capteur (14) de l'unité de commande (8), ou un commutateur (9) agencé du côté secondaire étant prévu, lequel peut être commandé de manière active par l'unité de commande (8) et lequel est, pour la détection du courant côté secondaire, en liaison avec une entrée de capteur de l'unité de commande (8),
**caractérisé en ce que** l'unité de commande (8) sert à utiliser une diode de corps du capteur de courant (10) ou du commutateur (9) en tant que résistance pour la mesure du courant.

2. Appareil d'actionnement d'éclairage d'urgence selon la revendication 1, dans lequel le capteur de courant (10) ou le commutateur (9) est un transistor à effet de champ.

3. Appareil d'actionnement d'éclairage d'urgence selon la revendication 1 ou la revendication 2, dans lequel l'unité de commande (8) sert à détecter des modifications d'amplitude à l'entrée de capteur et à commuter la batterie (11) lors de l'absence d'une modification d'amplitude.

4. Appareil d'actionnement d'éclairage d'urgence selon la revendication 3, dans lequel l'unité de commande (8) sert à constater l'absence de la modification d'amplitude lorsqu'un premier flanc de signal périodique n'est pas détecté.

5. Appareil d'actionnement d'éclairage d'urgence selon la revendication 1, dans lequel la tension côté secondaire sur le commutateur (9) côté secondaire est surveillée en tant que tension côté secondaire.

6. Appareil d'actionnement d'éclairage d'urgence selon l'une quelconque des revendications précédentes, dans lequel l'unité de commande (8) agencée du côté secondaire sert à reconnaître, au moyen du courant côté secondaire détecté ou de la tension côté secondaire détectée, une coupure de la tension d'alimentation (V) et à ensuite alimenter l'au moins un moyen d'éclairage (6) à partir de la batterie (11).

7. Appareil d'actionnement d'éclairage d'urgence selon l'une quelconque des revendications précédentes, dans lequel la batterie (11) est alimentée à travers le transducteur (2).

8. Appareil d'actionnement d'éclairage d'urgence selon l'une quelconque des revendications précédentes, dans lequel l'au moins un moyen d'éclairage (6) comprend une piste à LED.

9. Module d'éclairage d'urgence, comportant un appareil d'actionnement d'éclairage d'urgence (1) selon l'une quelconque des revendications précédentes et au moins un moyen d'éclairage (6) alimenté par celui-ci, en particulier un moyen d'éclairage d'urgence.

10. Procédé de commande d'un appareil d'actionnement d'éclairage d'urgence (1) pour l'alimentation de sources lumineuses (6), en particulier de sources lumineuses d'éclairage d'urgence, comprenant un transducteur (2) synchrone cadencé à séparation de potentiel, alimenté du côté primaire par une tension d'alimentation, en particulier un convertisseur à transfert indirect, des bornes d'alimentation pour au moins un moyen d'éclairage (6) étant présentes du côté secondaire du transducteur (2), un capteur de courant (10) agencé du côté secondaire étant prévu, lequel est, pour la détection du courant côté secondaire, en liaison avec une entrée de capteur (14) de l'unité de commande (8), ou un commutateur (9) agencé du côté secondaire étant prévu, lequel peut être commandé de manière active par l'unité de commande (8) et lequel est, pour la détection du courant côté secondaire, en liaison avec une entrée de capteur de l'unité de commande (8), dans lequel
une unité de commande (8) agencée du côté secondaire détecte un courant côté secondaire ou la tension côté secondaire et
une batterie (11) agencée du côté secondaire, pour l'alimentation de l'au moins un moyen d'éclairage (6) dans un cas de fonctionnement de secours commute en fonction du courant du côté secondaire ou de la tension du côté secondaire,
**caractérisé en ce que** l'unité de commande (8) sert à utiliser une diode de corps du capteur de courant (10) ou du commutateur (9) en tant que résistance pour la mesure du courant.
